Europäisches Patentamt

European Patent Office

Office européen des brevets

(11) Numéro de publication: **0 341 127**
**A2**

## (12) DEMANDE DE BREVET EUROPEEN

(21) Numéro de dépôt: **89401162.6**

(22) Date de dépôt: **25.04.89**

(51) Int. Cl.⁴: **B 29 C 45/14**
B 29 C 45/28, B 29 C 45/34

(30) Priorité: **04.05.88 FR 8805968**

(43) Date de publication de la demande:
**08.11.89 Bulletin 89/45**

(84) Etats contractants désignés:
**BE DE ES GB IT LU NL SE**

(71) Demandeur: **ANVER**
**2, rue Suchet**
**F-94701 Maisons-AlfortCédex (FR)**

(72) Inventeur: **Oriez, Robert**
**75 Avenue Ronsard**
**F-41400 Vendome (FR)**

**Gras, Elie**
**150 Chemin de la Carandière**
**F-69730 Genay (FR)**

(74) Mandataire: **Orès, Bernard et al**
**Cabinet ORES 6, Avenue de Messine**
**F-75008 Paris (FR)**

(54) Procédé et appareil de moulage haute fréquence de matière plastique liquide.

(57) Procédé et appareil de moulage haute fréquence par injection sous pression de matière plastique liquide dans un moule avec, le cas échéant, simultanément à ladite injection mise sous dépression de la cavité intérieure au moule.

Pour le moulage sur prisonnier et/ou le surmoulage d'une pièce de forme à contour fermé on dispose entre les débouchés dans le moule de la buse d'injection (17) et de la buse de mise à l'air libre ou en dépression (18) un insert (i) d'étanchéité dont la forme correspond au profil du moule et qui est en un matériau de même nature que celui de la matière plastique injectée, de sorte qu'il est fondu et soudé à la pièce moulée ou surmoulée lors de l'application du champ électrique haute fréquence par un générateur approprié.

FIG.4

EP 0 341 127 A2

**Description**

## PROCEDE ET APPAREIL DE MOULAGE HAUTE FREQUENCE DE MATIERE PLASTIQUE LIQUIDE

L'invention a pour objet un procédé et un appareil de moulage haute fréquence de matière plastique liquide.

On connaît déjà, par exemple par FR-A-2 598 959, au nom de la Demanderesse, un procédé et un dispositif de fabrication d'objets moulés en matière plastique à partir de plastisol liquide injecté dans un moule, lequel après remplissage sous pression simultanément à la mise en dépression de sa cavité intérieure est soumis à l'action d'un champ électrique haute fréquence d'un générateur approprié. Une telle technique est mise en oeuvre, par exemple, pour la fabrication d'articles de maroquinerie ou de pièces pour chaussures à partir de plastisol dont la gélification est obtenue par passage du moule entre les deux plaques du générateur haute fréquence.

Si le procédé et les dispositifs développés par la Demanderesse fournissant de bons résultats, les travaux poursuivis ont cependant montré qu'il était encore possible de les améliorer, d'une part et, d'autre part, d'étendre le procédé à d'autres applications que celle du moulage d'objets usuels.

C'est, par conséquent, un but général de l'invention de fournir des perfectionnements aux procédés et aux appareils de moulage haute fréquence de matière plastique liquide qui en accroissent considérablement les possibilités d'exploitation.

C'est, aussi, un but de l'invention de fournir un procédé et un appareil de moulage haute fréquence de matière plastique liquide qui permettent d'obtenir de façon simple et sûre des pièces plus complexes que celles généralement réalisées à l'aide des procédés connus, en particulier, des objets dans lesquels deux parties sont assemblées l'une à l'autre de façon permanente par surmoulage de l'une sur l'autre.

C'est, à cet égard, un but de l'invention de fournir un procédé et un appareil qui trouvent application pour le surmoulage à l'aide de matière plastique de pièces les plus diverses, par exemple en bois, en verre, en matériau composite stratifié et, le cas échéant, en métal.

C'est, enfin, un but de l'invention de fournir un procédé et un appareil qui permettent la réalisation de pièces surmoulées de formes les plus diverses, en particulier du type à contour fermé.

Un procédé selon l'invention, de moulage haute fréquence par injection sous pression de matière plastique liquide dans un moule avec, le cas échéant, simultanément à ladite injection mise sous dépression de la cavité intérieure au moule, est caractérisé en ce que pour le moulage sur prisonnier et/ou le surmoulage d'une pièce de forme à contour fermé on dispose entre les débouchés dans le moule de la buse d'injection et de la buse de mise à l'air libre ou en dépression un insert d'étanchéité dont la forme correspond au profil du moule et qui est en un matériau de même nature que celui de la matière plastique injectée de sorte qu'il est fondu et soudé à la pièce moulée ou surmoulée lors de l'application du champ électrique haute fréquence par un générateur approprié.

Le procédé peut avantageusement être mis en oeuvre avec un plastisol, c'est-à-dire une suspension ou émulsion de résine PVC, sans toutefois être limité à un tel produit, l'invention trouvant au contraire application pour le moulage de très nombreuses matières plastiques liquides, notamment celles du type polyuréthanne ou polyéther.

L'appareil de moulage haute fréquence de matière plastique liquide selon l'invention, comprenant une buse d'injection dans un moule de matière plastique sous pression et une buse de liaison de la cavité dudit moule à l'atmosphère ou à une source de dépression, avec un dispositif de vérins à double effet pour la commande de l'ouverture et de la fermeture desdites buses est caractérisé en ce que ledit dispositif forme un ensemble unitaire propre à être associé de manière amovible à chaque moule qu'il équipe et dans lequel les pistons et les parties qui leur sont associées des vérins sont en un matériau ne présentant pas de perte diélectrique.

Le dispositif de vérins est ainsi insensible au champ électrique avec pour conséquence un fonctionnement sûr et sans aléas de l'appareil, notamment lors de l'application du champ électrique haute fréquence.

D'autres caractéristiques et avantages de l'invention apparaîtront de la description qui suit, faite à titre d'exemple et en référence au dessin annexé dans lequel :

- la figure 1 est un schéma synoptique illustrant le cycle de fonctionnement d'un appareil de moulage haute fréquence ;

- la figure 2 est une vue partie en coupe, partie en élévation d'une partie de l'appareil selon l'invention et dans une première condition de fonctionnement ;

- la figure 3 montre un détail de l'appareil pour une autre condition de fonctionnement ;

- la figure 4 est une vue schématique de dessus et avec arrachement partiel d'une partie d'appareil selon l'invention comme utilisé pour le surmoulage d'une pièce à contour fermé.

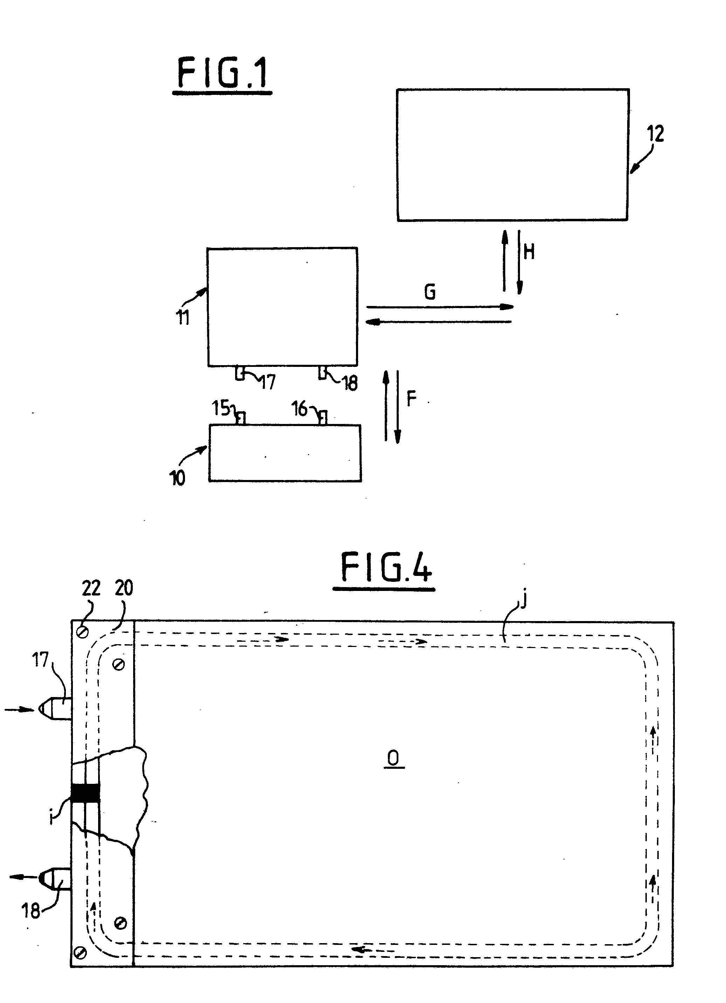

On se réfère d'abord à la figure 1, qui illustre, très schématiquement, le fonctionnement d'un appareil de moulage haute fréquence de matière plastique liquide.

L'appareil est essentiellement constitué d'une première partie 10 d'alimentation en matière plastique liquide, par exemple un plastisol, d'un moule 11, lequel, après remplissage, est amené au droit d'un générateur électrique haute fréquence 12. Ce dernier est généralement fixe alors que les parties 10 et 11 sont mobiles, la première au rapprochement et à l'écartement du moule 11 comme montré par la double flèche F, et la seconde au rapprochement et à l'écartement du générateur 12, comme montré par les doubles flèches G et H. De façon plus précise, la partie d'alimentation 10 comprend une buse d'injection de matière plastique liquide 15 et une buse 16 propre à être reliée à l'atmosphère ou à une source de dépression par l'intermédiaire d'un pot ou bac de décantation. Avec les buses 15 et 16 de la partie d'alimentation 10, sont propres à coopérer des embouts conjugués 17 et 18, respectivement, de la partie de moule 11 lorsque, ladite partie étant immobile, la partie 10 est rapprochée dudit moule. Après que celui-ci ait été rempli de matière plastique liquide par injection sous pression et, simultanément, mise en dépression ou à l'atmosphère de sa cavité interne pour assurer un remplissage satisfaisant, notamment éliminer toute bulle d'air ou de gaz parasite, la partie d'alimentation 10 est écartée du moule et ce dernier par un déplacement suivant les flèches G et H amené dans le générateur de champ électrique 12. Après polymérisation de la matière thermoplastique, le moule est retiré du générateur, ouvert, la pièce formée retirée et après que le moule ait été ramené dans sa position initiale, l'appareil est en condition pour l'exécution d'un nouveau cycle.

Un programmeur ou automate approprié, en soi connu, commande la succession des opérations qui viennent d'être décrites.

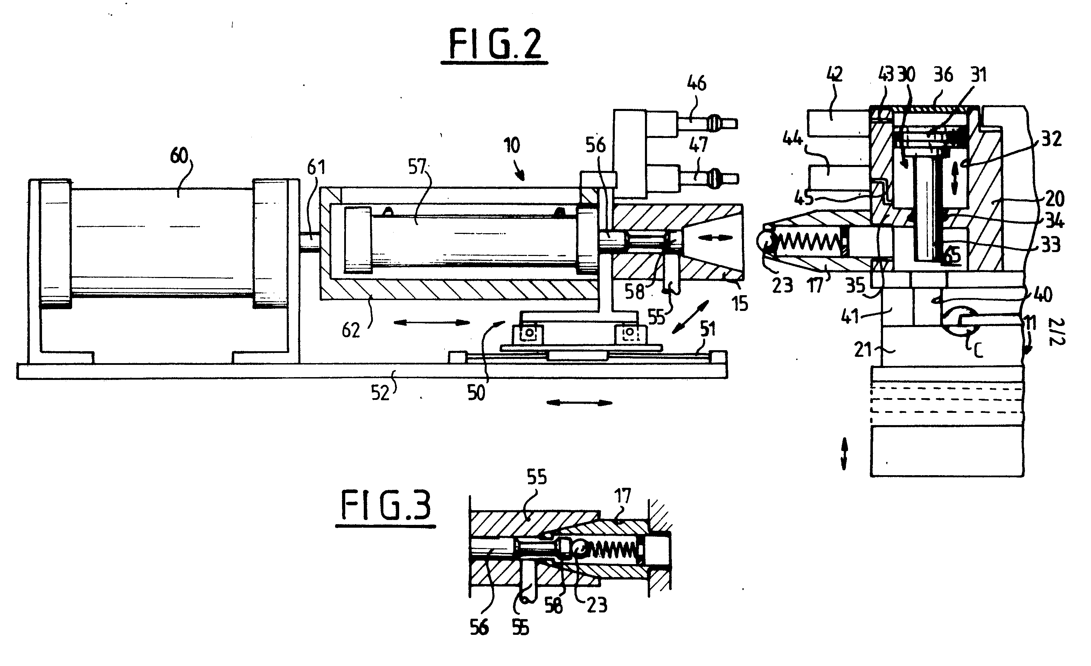

Pour accroître les possibilités d'exploitation de l'appareil, notamment assurer un fonctionnement sûr et sans aléas, l'invention prévoit, comme montré sur les figures 2 et 3, de rassembler en un dispositif unitaire la buse 17 d'injection de matière plastique liquide et la buse 18 de liaison à la source de dépression, ainsi que les moyens de commande desdites buses, ledit dispositif unitaire étant propre à être associé de manière amovible à chaque moule qu'il équipe. Comme montré sur la figure 2, la buse 17 (et il en est de même pour la buse 18 non représentée) est une buse mâle montée dans un bloc 20 propre à être fixée de manière amovible sur le moule 21 proprement-dit par des moyens comme des boulons 22, montrés schématiquement sur la figure 4.

Pour la commande d'ouverture et de fermeture des buses 17 et 18, par exemple des buses à bille 23, l'invention prévoit de monter dans le bloc 20 deux vérins à double effet associés respectivement à chacune des buses, celui associé à la buse 17 étant montré sur la figure 2 où il est désigné par la référence d'ensemble 30. Un tel vérin comprend un piston 31 monté à coulissement dans un cylindre 32 et une tige de piston 33 montée à étanchéité par un joint torique 34 dans un orifice de passage du fond 35 du cylindre 32, lequel est en outre obturé à son extrémité opposée par une plaque 36.

Conformément à l'invention, le piston 31 et la tige 33 qui lui est associée sont en un matériau qui ne présente pas de perte diélectrique, et qui de ce fait est insensible au champ électrique haute fréquence, un exemple d'un tel matériau étant un polytétrafluoroéthylène ou un matériau analogue, du type de ceux connus sous la marque TEFLON (une Marque Déposée de la société Du Pont de Nemours). Pour la commande du mouvement du piston 31 et de sa tige 33, dont l'extrémité libre est propre à dégager ou obturer un forage 40 de forme conjuguée du contre-moule 41 du moule 21, on prévoit, de préférence, des moyens pneumatiques comportant une première canalisation 42 débouchant par un conduit 43 percé dans le bloc 20 dans la première chambre ménagée entre le couvercle 36 et le piston 31, tandis qu'une seconde canalisation 44 débouche par un forage 45 ménagé dans le même bloc 20 dans l'autre chambre du vérin limitée entre le piston 31 et le fond 35 du cylindre 32. Aux canalisations 42 et 44 sont propres à être abouchées des canalisations correspondantes 46 et 47, respectivement, portées par un chariot mobile 50 monté à coulissement sur des rails 51 fixés sur une embase 52 de l'appareil. Comme bien montré sur la figure 2, le chariot 50 porte également les buses ou embouts femelles 15 et 16 destinés à coopérer avec les buses 17 et 18, respectivement, l'embout 15 étant relié à une canalisation d'introduction de la matière plastique liquide 55, alors que l'embout 16 est relié à une source de dépression par un pot ou bac de décantation non représenté.

Pour l'ouverture et/ou la fermeture des canalisations d'injection de matière plastique liquide et/ou de mise en communication avec la source de dépression, chacun des embouts 15 et 16 est équipé d'une vanne comme montré en 56 pour l'embout 15, et qui est le plus simplement constituée par un cylindre monté à coulissement dans l'embout sous l'action d'un vérin 57 avec une tête d'extrémité 58 propre à coopérer avec la bille 23, comme montré sur la figure 3.

Le fonctionnement de cet appareil résulte immédiatement de ce qui précède. La matière plastique liquide à injecter étant maintenue sous pression permanente, soit à l'aide d'une pompe, soit à l'aide d'un pot, on rapproche tout d'abord la partie de tête 10 de l'appareil du dispositif de moule, par exemple à l'aide d'un vérin comme 60, figure 2, monté sur l'embase 52 et dont la tige 61 est reliée à un bloc 62 de ladite tête. Après accomplement des embouts 15 et 16 avec les buses 17 et 18, respectivement, et des canalisations 46 et 47 avec les canalisations 42 et 44, respectivement, également, les moyens pneumatiques correspondant à l'embout 16 et à la buse 18 sont rendus opératoires pour que la source de dépression, par exemple un pot ou bac de décantation, exerce son action alors que le vérin à double effet associé à la canalisation 55 d'injection de plastisol est dans sa condition qui interdit cette injection dans le moule 21. Après mise sous vide de la cavité C intérieure au moule, le vérin à double effet autorisant l'injection de plastisol est rendu opératoire pour dégager la tige 33 du piston de l'ouverture 40 du contre-moule 41. Le plastisol est injecté à température ambiante par un circuit qui comprend, à partir de la canalisation 55, la vanne 56 alors ouverte, -comme montré sur la figure 3-, la buse 17, une chambre 65 ménagée sous le fond 35 du bloc 20 et adjacente à l'ouverture 40, ladite ouverture, puis la cavité C jusqu'à remplir totalement cette dernière, l'excès de matière plastique étant recueilli, le cas échéant, dans le pot ou bac de décantation à partir duquel ladite matière plastique peut ensuite être recyclée. Après remplissage du moule, le vérin à double effet 30 est actionné pour refermer l'orifice 40 du contre-moule, ce qui élimine en même temps la carotte de moulage, et la buse 18 ayant été entre-temps déconnectée de la source de dépression, le verin 57 est actionné pour refermer les vannes comme 56 des embouts 15 et 16 ; après manoeuvre du vérin 60, la tête 10 est écartée du dispositif de moule 11. Ce dernier peut alors, comme indiqué ci-dessus, et par un déplacement suivant la direction des doubles flèches G et H être amené dans le générateur haute fréquence 12 où est effectuée la polymérisation de la matière plastique injectée.

Un appareil selon l'invention, tel que décrit ci-dessus, est également d'application intéressante pour la mise en oeuvre d'un procédé de moulage sur prisonnier ou surmoulage d'une pièce de forme à contour fermé. Pour la mise en oeuvre d'un tel procédé, l'invention prévoit de disposer entre les débouchés dans le moule 21 de la buse d'injection 17 et de la buse de mise en dépression 18, dans le moule 21, un insert i, figure 4, dont la forme correspond au profil du moule et qui est en un matériau de même nature que celui de la matière plastique injectée. Un tel insert, qui assure l'étanchéité entre la buse d'injection 18 et celle de liaison au pot ou bac de décantation en dépression, permet un remplissage complet du moule et du contre-moule, notamment lorsque le procédé est mis en oeuvre pour le sur moulage de la périphérie d'un objet O, par exemple une glace ou vitre d'automobile, sur les bords de laquelle on souhaite fixer par surmoulage un joint i.

Lors de l'application du champ électrique haute fréquence dans le générateur 12, l'insert i est à la fois fondu et soudé au reste de la matière plastique constitutive du joint i fournissant ainsi un joint continu d'excellente qualité.

Le procédé selon l'invention, qui peut être mis en oeuvre avec un plastisol, mais également avec toute matière plastique liquide, en particulier du type polyuréthanne ou polyéther, permet ainsi et sous la seule réserve que le prisonnier ou la pièce à surmouler permette l'utilisation d'un procédé de moulage haute-fréquence d'obtenir des formes de pièces d'aspects les plus divers, en particulier lorsque la pièce à surmouler est en bois, en verre, en matériau composite stratifié ou, le cas échéant, en métal si les conditions "d'équilibrage" du moule au traitement haute fréquence sont calculées de manière satisfaisante.

Les possibilités d'exploitation du procédé sont encore accrues lorsque, par un choix approprié d'un primaire d'accrochage préalablement disposé sur le prisonnier ou la pièce à surmouler avant sa mise en place dans le moule, on favorise le collage de la matière plastique injectée sur ladite pièce ou ledit prisonnier.

## Revendications

1. Procédé de moulage haute fréquence par injection sous pression de matière plastique liquide dans un moule avec, le cas échéant, simultanément à ladite injection mise sous dépression de la cavité intérieure au moule, caractérisé en ce que pour le moulage sur prisonnier et/ou le surmoulage d'une pièce de forme à contour fermé on dispose entre les débouchés dans le moule (21) de la buse d'injection (17) et de la buse de mise à l'air libre ou en dépression (18) un insert (i) d'étanchéité dont la forme correspond au profil du moule et qui est en un matériau de même nature que celui de la matière plastique injectée, de sorte qu'il est fondu et soudé à la pièce moulée ou surmoulée lors de l'application du champ électrique haute fréquence par un générateur approprié.

2. Procédé selon la revendication 1, caractérisé en ce que la matière plastique liquide injectée est un plastisol ou une matière plastique du type des polyuréthannes ou des polyéthers.

3. Appareil de moulage haute fréquence pour la mise en oeuvre du procédé selon la revendication 1 ou la revendication 2, comprenant une buse d'injection dans un moule de matière plastique sous pression et une buse de liaison de la cavité dudit moule à l'atmosphère ou à une source de dépression, avec un dispositif de vérins à double effet pour la commande de l'ouverture et de la fermeture desdites buses, caractérisé en ce que ledit dispositif forme un ensemble unitaire propre à être associé de manière amovible à chaque moule qu'il équipe et dans lequel les pistons (30...) des vérins et les parties qui leur sont associées (33...) sont en un matériau ne présentant pas de perte diélectrique.

4. Appareil selon la revendication 3, caractérisé en ce que les pistons (30...) des vérins et les parties qui leur sont associées (33...) des vérins sont en polytétrafluoroéthylène ou en un matériau analogue.

5. Appareil selon l'une des revendications 3 ou 4, caractérisé en ce que le dispositif est enfermé dans un bloc (20) propre à être rapporté sur le moule (21) auquel il peut être fixé par des goujons (22) ou analogues.

6. Produit obtenu par mise en oeuvre du procédé selon l'une quelconque des revendications 1 et 2, ou à l'aide d'un appareil selon l'une quelconque des revendications 4 à 5.

7. Produit selon la revendication 6, notamment glace ou vitre d'automobile comportant un joint périphérique surmoulé sur son bord libre.

# FIG.1

12

11

17  18

15  16

10

G

H

F

# FIG.4

22  20

17

18

i

O

j

## FIG.2

## FIG.3

EP 0 341 127 A2

2/2